# EUROPEAN PATENT SPECIFICATION

(11) **EP 1 143 185 B1**
(45) Date of publication and mention of the grant of the patent: **14.06.2006**
(21) Application number: 01201218.3
(22) Date of filing: 03.04.2001
(51) Int. Cl.: F16L 37/092

(54) **Quick coupling device between a pipe and a rigid element**
Schnellverbindung zwischen einem Rohr und einem starren Element
Raccord rapide entre un tuyau et un élément rigide

(30) Priority: 04.04.2000 IT MI000715
(43) Date of publication of application: 10.10.2001
(73) Proprietor: Camozzi S.p.A. Societa Unipersonale, 20126 Brescia (IT)
(72) Inventor: Camozzi, Giovanni, 25065 Lumezzane (IT); Gnutti, Gianluca, 25065 Lumezzane (IT)
(74) Representative: Zanardo, Giovanni

(56) References cited:
- EP-A- 0 661 489
- EP-A- 0 939 267
- DE-A- 3 710 853

## Description

The present invention relates to a quick coupling device between a pipe and a rigid element.

Various types of quick coupling devices are known which allow one pipe end to be inserted and locked with respect to a base block or rigid element to produce the flowing of fluids, in particular air.

In general, these types of connectors as shown in EP 0939267 include an external body, connected to a manifold by screwing or similar and a gripper, one end of which is sliding in a restricted area of an internal cavity made in the external body. In addition, a gasket is present inside the cavity between the end of the gripper and the bottom of the internal cavity, namely an O-ring, which produces both the seal position of the pipe as well as the automatic release of the same in the cited restricted area. The gripper consists of a cylindrical portion, if necessary with an enlarged end, terminating at the other end with a series of clamping teeth, made by notches directed according to the axial generating lines made in the gripper. The clamping teeth thus give way according to a radial direction at a transversal section of the gripper and, due to a ring-shaped projection made in the cavity of the external body and radially protruding inwards, are moveable between an engagement position on an inserted tube and a release position, aided by the presence of the gasket in the form of an O-ring.

When an end portion of the pipe is inserted in the gripper which is placed in the external body, the teeth of the gripper widen and allow its insertion.

Acting instead to extract the pipe from the quick coupling device, pointed portions of the teeth, made on the ends facing radially inwards, engage with the external surface of the pipe and they lock it, since the end of the gripper comes into contact with the ring-shaped projection and is forced to direct itself radially inwards.

Should the gripper instead be held in the insertion position of the pipe or is axially squashed to reach the bottom of the cavity, the series of teeth are released from the external surface of the pipe, also due to the aid of the O-ring present on the cavity bottom, and the pipe is thus able to be extracted freely.

Quick coupling devices thus made, though allowing quick pipe insertion, the firm positioning of the same and, in any case, extraction of the pipe, when necessary, can cause some seal problems of the fluid passing between the base block, on which the device is disposed, and the pipe inserted in it.

In fact, the presence of the pointed portions of the teeth and the various insertion and disconnection operations of the pipe from the device, give rise to scoring on the end external surface of the pipe. From such scoring a leakage of the fluid passing there is thus possible.

This problem can be crucial to a limited extent when the fluid is air, but proves certainly more important when the fluid is a liquid such as oil or similar.

In order to try and find a solution to these drawbacks various types of coupling devices have been prepared which envisage the positioning of a series of gaskets and arrangements of parts suitable to guarantee a sure seal.

However, the known devices consist of many parts which need to be mutually constrained, e.g. by screwing, before the end of the pipe is inserted, and which, in any case, does not allow the quick extraction of the pipe. In fact, it is necessary to proceed either with the disassembly of the device parts, where possible, or even proceed with the cutting of the end portion of the pipe, the elimination of the coupling device, and its replacement with a new device, after the cut end of the pipe has been reinserted in the device parts under assembly.

Apart from the loss of the device, which might be retrieved, the pipe is shortened which, over time, no longer allows a correct connection to be made, unless the same pipe is replaced, since it has become too short.

Hence this results in assembly and production costs of the quick coupling device in several parts, in addition to inevitably longer intervention times than those required in the case of a quick intervention.

The need to provide several parts for the connection and/or disconnection of the pipe or the use of an additional tool or implement for intervention on the coupling device also entail considerable problems in the case in which the coupling devices are assembled in a set close to each other, in extremely restricted spaces.

The aim of the present invention is to make a quick coupling device between a pipe and a rigid element which solves the technical problems mentioned above, above all allowing both the prompt connection and disconnection of the pipe as well as a sure seal.

Another aim is to produce a quick coupling device between a pipe and a rigid element which has a minimum number of component parts with minimized production costs.

Another aim is to produce a quick coupling device between a pipe and a rigid element which does not require any additional tool or implement to proceed with the connection and/or disconnection of the pipe.

These aims, according to the present invention, are reached by producing a quick coupling device between a pipe and a rigid element as detailed in claim 1.

Additional characteristics of the device of the invention are the object of the dependent claims.

The characteristics and the advantages of a quick coupling device between a pipe and a rigid element, according to the present invention, will be made clearer from the following illustrative and nonlimiting description referring to the enclosed schematic designs, in which:
- figure 1 is an exploded view of a first embodiment of the quick coupling device according to the invention, in which the constituent parts shown are partially in section,
- figure 2 is a partial section view of the quick coupling device of figure 1 after the pipe has been inserted and is still released, and
- figure 3 is the same section view as in figure 2 with the pipe firmly coupled inside the coupling device,
- figure 4 is a partial section view of a second embodiment of the coupling device after the pipe has been inserted and is still released.

With reference to the figures, a quick coupling device between a pipe and a rigid element is shown, which is denoted as a whole by 11 and which is made according to the invention.

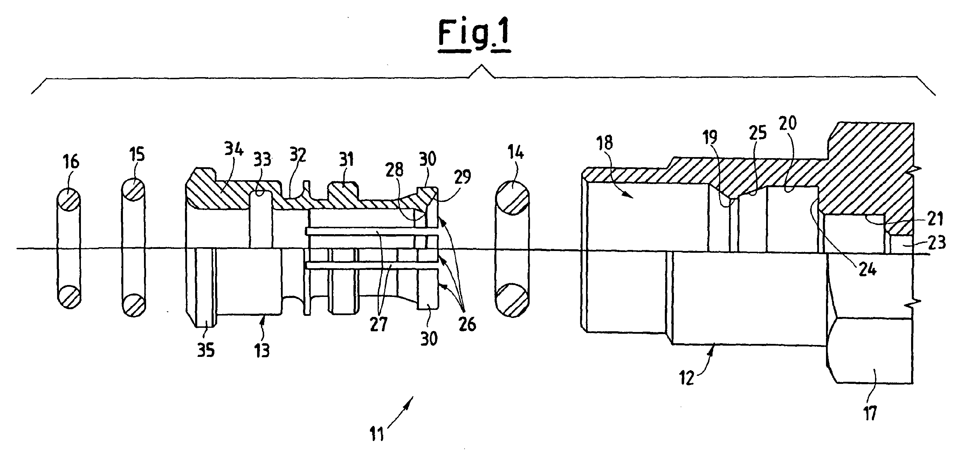

As shown in figure 1, the coupling device 11 includes an external body 12, a gripper 13 which can be positioned in a cavity of the external body 12, a gasket, in the example in the form of an O-ring 14, in addition to at least two further gaskets, in the example in the form of sealing rings 15 and 16.

The external body 12 is connected to a manifold of the fluid (not shown) and locked there, acting on one of its ring nut portions schematized in 17. The external body 12, as said, has a cylindrical cavity on its inside denoted as a whole by 18 which has a ring-shaped projection 19, in one of its middle portions, which is radially protruding inwards.

This ring-shaped projection 19 identifies a restricted terminal area 20 of the cavity 18 which is directly connected to a cylindrical housing 21 having the same diameter as a pipe 22 which must be introduced in the coupling device 11 and that receives one end of the pipe. Naturally, the cylindrical housing 21 on one side continues into an opening 23 which allows the passage of the fluid into the manifold, not shown, and on the other identifies an undercut 24 that acts as bottom of the cavity 18. It is noted that between such undercut or bottom 24 and a slanting surface 25 of the side of the ring-shaped projection 19 extends the cited restricted area 20 of the cavity 18 in which the O-ring 14 is housed.

The gripper 13 consists of a cylindrical portion including on one side a series of clamping teeth 26 defined by notches 27 directed according to the generating lines of the cylinder. Each of said teeth has pointed portions 28, facing radially inwards to interact with the pipe 22. The free end of each tooth 26 has a recessed taper 29 and directed towards the pointed portions 28 and able to come into contact with the O-ring 14. Each tooth 26 also has a projecting ridge area 30, facing outwards and so as to cooperate with the slanting surface 25 of the ring-shaped projection 19.

The gripper 13 also has a flanged portion 31, made almost at the end of the notches 27, which is facing radially outwards and has a similar diameter to the internal diameter of the cavity. This flanged portion 31 acts as a guide of the gripper 13. According to the invention in addition the gripper 13 also has in one of its end portions 34, this also acting as a guide and facing outwards of the cavity 18, laterally a pair of ring-shaped housings 32 and 33 suitable to receive the gaskets 15 and 16. In particular, a housing 32 is provided made on the external surface of the gripper 13, turned outwards and facing the internal surface of the cavity 18. The housing 33 is instead made on the internal surface of the gripper 13 and is turned inwards to face the external surface of the pipe 22.

All these characteristics both of the external body 12 and of the gripper 13 are clearly visible in figure 1.

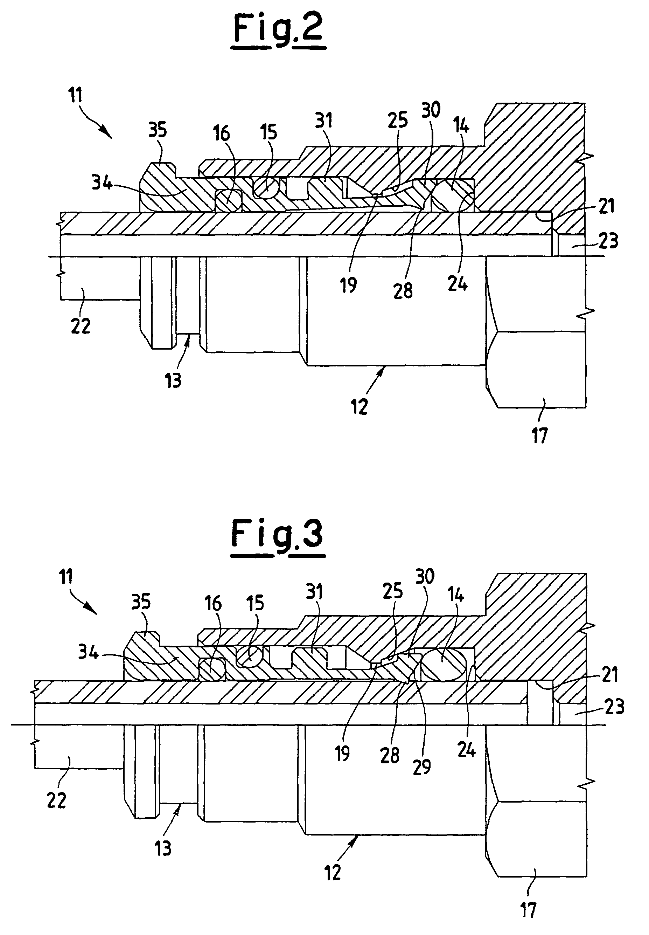

Figure 2 instead shows which is the position assumed by the parts when the pipe 22 is inserted inside the gripper 13 placed in the external body 12 with the relative seals 14, 15 and 16, housed in the respective positions or seats.

The pipe 22 slides freely inside the gripper 13, its external surface is not affected by the pointed portions 28 which are arranged indented, each tooth 26 being placed in the restricted area 20 of the cavity 18. The end of the pipe 22 is therefore abutted in the cylindrical housing 21.

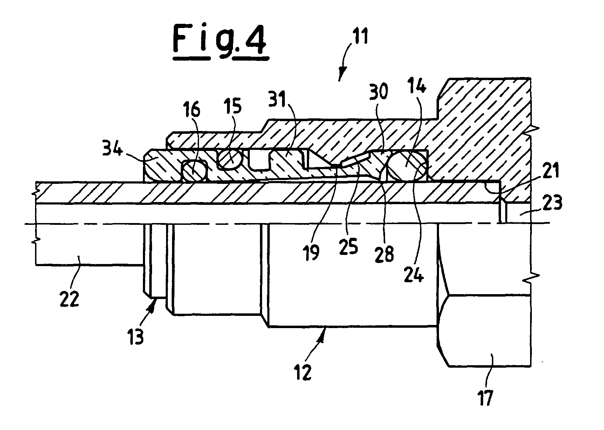

Simply pulling the pipe 22 outwards and/or the build-up of pressure inside the device caused by the fluid, namely air, oil or other fluids, put the device in the position shown in figure 3. In this position the pipe 22 is firmly coupled in the device when the pointed portions 28 of the teeth 26 firmly engage with the external surface of the pipe 22. This engagement occurs since the O-ring 14, is stressed by the fluid under pressure to move against the taper 29 of the various teeth 26, thus stressing the whole gripper 13 to move forward towards the outside in the cavity 18 or in the restricted area 20 of the cavity, and since the pipe is pushed by the internal pressure and therefore engages with the aforesaid. However the projecting area 30 facing outwards and present on each tooth 26 engages with the inclined surface 25 of the ring-shaped projection 19 inside the cavity 18 forcing the teeth to radially bend inwards and to increasingly engage with the external surface of the pipe 22. This action guarantees the coupling and an initial seal is produced, due to the presence of the O-ring 14.

Should it however be necessary to remove the pipe 22 from the quick coupling device, simply apply pressure to an enlarged flanging 35 of the end portion 34 of the gripper 13, facing outwards of the device, so as to cause a slight return of the gripper 13 in the cavity 18. In this way, the taper 29 of the free end of each tooth pushes the O-ring 14 on the bottom 24 of the cavity 18; besides the taper 29 engaging with the same O-ring 14 causes the teeth 26 to widen in the restricted area 20 and therefore the release of the pointed portions 28 from the external surface of the pipe.

The maintenance of the gripper 13 in the aforesaid position, by action on the enlarged flanging 35 of the end 34 of the same gripper, thus allows the free release of the pipe 22 from inside the device (in a wholly similar position to that shown in figure 2). Figure 4 shows a second embodiment of the quick coupling device which is made without an enlarged flanging 35, though functioning in the same manner.

It is natural that the pointed portions 28, engaging with and being released from the external surface of the pipe 22, produce scoring from which a possible discharge or emission of the fluid is possible.

The arrangement of the two additional gaskets 15 and 16 in the remaining part of the gripper facing outwards of the cavity guarantees the seal in any case. In fact, such gaskets act on the portion of pipe 22 which is not, at any stage, affected by the pointed portions 28 and which is therefore without scoring.

Despite such a seal arrangement, the quick coupling device according to the invention anyhow allows a quick engagement or coupling and release or uncoupling of the pipe.

Furthermore, it is important to point out that no additional tools or implements are needed for the coupling and release operations, manual pressure being sufficient, at the release, which is applied to the end of the gripper 13 facing outwards.

The gripper advantageously carries out both the function of holding the pipe as well as releasing the same.

The quick coupling device of the present invention is also made of a minimum number of components (the external body and the gripper) contrary to that envisaged so far for applications in which a good seal is of paramount importance, such as with oil or similar.

The device thus conceived, also being subjected to repeated connections and disconnections of the pipe, does not require any cutting of the pipe itself, which therefore stays at the correct initial length.

Furthermore, the quick coupling device of the invention allows easy intervention in extremely restricted and limited spaces, for example in the case of connectors which are assembled in a set side by side.

## Claims

1. A quick coupling device between a pipe and a rigid element including an external body (12), a gripper (13) which can be positioned in a cavity (18) of the external body 12) within which one end of a pipe (22) can be placed, and a gasket (14), a ring-shaped projection (19) being provided in a middle area of the cavity (18), radially protruding inwards and able to hold one end of said gripper (13) in said cavity (18) sliding between said projection (19) and the bottom (24) of said cavity (18) where said gasket (14) is placed, **characterised in that** said gripper (13) carries two additional gaskets (15, 16), in an end portion placed in an area of said cavity facing an end opened outwards, a first gasket (15) being received in a housing (32) made on the external surface of the gripper (13) and a second gasket (16) being received in a housing (33) made on the internal surface of the gripper (13).

2. A coupling device as in claim 1, **characterised in that** said gripper (13) is cylindrical and includes a series of clamping teeth (26) identified by notches (27) directed according to the generating lines of the cylinder, each of said teeth (26) having pointed portions (28) facing radially inwards and in one of their free ends facing said gasket (14) having a recessed taper (29) and facing towards said pointed portions (28).

3. A coupling device as in claim 1, **characterised in that** said gripper in a middle portion that is placed in said cavity (18) towards an open end of the same cavity has at least one portion (31, 34) which acts as a guide.

4. A coupling device as in any one of the previous claims, **characterised in that** said gasket (14) is an O-ring (14).

## Patentansprüche

1. Schnellkopplungsvorrichtung zwischen einem Rohr und einem starren Element mit einem äußeren Körper (12), einem Greifer (13), der in einem Hohlraum (18) des äußeren Körpers (12) angeordnet sein kann und in dem ein Ende eines Rohrs (22) platziert sein kann, und einer Dichtung (14), wobei ein ringförmiger Vorsprung (19) in einem mittleren Bereich des Hohlraums (18) vorgesehen ist, der radial nach innen vorsteht und in der Lage ist, ein Ende des Greifers (13), das zwischen dem Vorsprung (19) und dem Grund (24) des Hohlraums (18), wo die Dichtung (14) platziert ist, gleitet, in dem Hohlraum (18) zu halten, **dadurch gekennzeichnet, dass** der Greifer (13) zwei zusätzliche Dichtungen (15, 16) in einem Endabschnitt trägt, der in einem Bereich des Hohlraums platziert ist, der dem nach außen geöffneten Ende zugewandt ist, wobei eine erste Dichtung (15) in einem an der Außenfläche des Greifers (13) gebildeten Gehäuse (32) aufgenommen ist und eine zweite Dichtung (16) in einem an der Innenfläche des Greifers (13) gebildeten Gehäuse (33) aufgenommen ist.

2. Kopplungsvorrichtung nach Anspruch 1, **dadurch gekennzeichnet, dass** der Greifer (13) zylindrisch ist und eine Reihe von Klemmzähnen (26) umfasst, die durch Kerben (27) gebildet sind, die gemäß den Erzeugenden des Zylinders gerichtet sind, wobei jeder der Zähne (26) spitze Abschnitte (28) aufweist, die radial nach innen gewandt sind, und in einem seiner freien Enden, das der Dichtung (14) zugewandt ist, eine eingelassene Schräge (29) aufweist, die den spitzen Abschnitten (28) zugewandt ist.

3. Kopplungsvorrichtung nach Anspruch 1, **dadurch gekennzeichnet, dass** der Greifer in einem mittleren Abschnitt, der in dem Hohlraum (18) in Richtung eines offenen Endes desselben Hohlraumes platziert ist, mindestens einen Abschnitt (31, 34) aufweist, der als Führung wirkt.

4. Kopplungsvorrichtung nach einem der vorhergehenden Ansprüche, **dadurch gekennzeichnet, dass** die Dichtung (14) ein O-Ring (14) ist.

## Revendications

1. Dispositif de raccord rapide entre un tuyau et un élément rigide comprenant un corps externe (12), une pince (13) qui peut être positionnée dans une cavité (18) du corps externe (12) à l'intérieur duquel peut être placée une extrémité d'un tuyau (22), ainsi qu'un joint d'étanchéité (14), une saillie annulaire (19) étant prévue dans une zone médiane de la cavité (18), dépassant radialement vers l'intérieur et capable de maintenir une extrémité de ladite pince(13) dans ladite cavité (18) en glissant entre ladite saillie annulaire (19) et le fond (24) de ladite cavité (18) où est placé ledit joint d'étanchéité, **caractérisé en ce que** ladite pince (13) supporte deux joints d'étanchéité supplémentaires (15, 16) dans une partie d'extrémité qui est placée dans une zone de ladite cavité faisant face à l'extrémité ouverte vers l'extérieur, un premier joint d'étanchéité (15) étant reçu dans un logement (32) réalisé sur la surface externe de la pince (13), et un second joint d'étanchéité (16) étant reçu dans un logement (33) réalisé sur la surface interne de la pince(13).

2. Dispositif de raccord selon la revendication 1, **caractérisé en ce que** ladite pince(13) est cylindrique et qu'elle comprend une série de dents de serrage (26) définies par des encoches (27) dirigées selon les lignes génératrices du cylindre, chacune desdites dents (26) comportant des parties pointues (28) faisant face radialement vers l'intérieur, et faisant face, dans une de leurs extrémités libres, audit joint d'étanchéité (14) comportant une partie conique en creux (29), et faisant face vers lesdites parties pointues (28).

3. Dispositif de raccord selon la revendication 1, **caractérisé en ce que** ladite pince, se trouvant dans une partie médiane qui est placée dans ladite cavité (18) vers une extrémité ouverte de la même cavité, comporte au moins une partie (31, 34) qui agit en tant que guide.

4. Dispositif de raccord selon l'une quelconque des revendications précédentes, **caractérisé en ce que** ledit joint d'étanchéité (14) est un joint torique (14).
